(19) Europäisches Patentamt
European Patent Office
Office européen des brevets

(11) **EP 2 660 738 A1**

(12) **EUROPEAN PATENT APPLICATION**

(43) Date of publication:
**06.11.2013 Bulletin 2013/45**

(51) Int Cl.:
**G06F 17/50** (2006.01)

(21) Application number: **12166226.6**

(22) Date of filing: **30.04.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Institute of Nuclear Energy Research Atomic Energy Council**
**325 Taoyuan County (TW)**

(72) Inventor: **Ou, Ting-Chia**
**Longtan Township, Taoyuan County (TW)**

(74) Representative: **Lang, Christian et al**
**LangPatent**
**Anwaltskanzlei**
**Rosenheimer Strasse 139**
**81671 München (DE)**

(54) **Distribution power flow analysis system and method**

(57) A distribution power flow analysis system and method are provided. A first relationship matrix and a second relationship matrix are used to analyze distribution power flow. The first relationship matrix is a relationship between a node injection current matrix and a branch current matrix. The second relationship matrix is a relationship between a node mismatch matrix and the branch current matrix. The system and method are applicable to cases of adding a new node, impedance or parallel loop. Compared with other conventional methods, the system and method have good robustness, fast execution speed and low memory space requirement in power flow calculation of a distribution power system.

FIG. 7

**Description**

**BACKGROUND OF THE INVENTION**

**Field of Invention**

The present invention relates to a distribution power flow analysis system and method.

**Related Art**

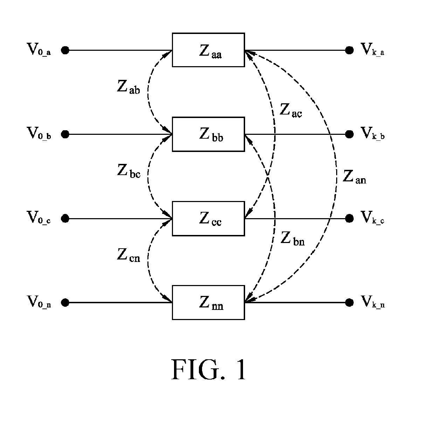

FIG.1 is a schematic view of a three-phase impedance model of a conventional bus. A three-phase impedance model of bus *0* to bus *k* is provided, and Z-matrix indicates a 4x4 matrix, as shown in Formula (1):

$$\left[ Z_{abcn} \right] = \begin{bmatrix} Z_{aa} & Z_{ab} & Z_{ac} & Z_{an} \\ Z_{ba} & Z_{bb} & Z_{bc} & Z_{bn} \\ Z_{ca} & Z_{cb} & Z_{cc} & Z_{cn} \\ Z_{na} & Z_{nb} & Z_{nc} & Z_{nn} \end{bmatrix} \quad (1).$$

Z-matrix may be reduced to a 3x3 matrix as shown in Formula (2) through Kron's Reduction:

$$\left[ Z_{abc} \right] = \begin{bmatrix} Z_{aa} & Z_{ab} & Z_{ac} \\ Z_{ba} & Z_{bb} & Z_{bc} \\ Z_{ca} & Z_{cb} & Z_{cc} \end{bmatrix} \quad (2).$$

Therefore, a relationship between voltages and currents from bus *0* to bus *k* may be expressed by Formula (3) through Z-matrix:

$$\begin{bmatrix} V_{0\_a} \\ V_{0\_b} \\ V_{0\_c} \end{bmatrix} - \begin{bmatrix} V_{k\_a} \\ V_{k\_b} \\ V_{k\_c} \end{bmatrix} = \begin{bmatrix} Z_{aa} & Z_{ab} & Z_{ac} \\ Z_{ba} & Z_{bb} & Z_{bc} \\ Z_{ca} & Z_{cb} & Z_{cc} \end{bmatrix} \begin{bmatrix} I_a \\ I_b \\ I_c \end{bmatrix} \quad (3).$$

Formula (3) may be expressed by a general formula through a tolerance $\Delta V$, as shown in Formula (4):

$$\left[ \Delta \mathbf{V}_{abc} \right] = \left[ \mathbf{Z}_{abc} \right] \left[ \mathbf{I}_{abc} \right] \quad (4).$$

In the conventional distribution power flow analysis system and method, complex calculation must be used. In addition, when a new node or impendence is added, an impendence (Z) matrix changes greatly, and the calculation is also complex, resulting in reduce of the execution speed, a requirement for great memory space, and poor robustness.
Therefore, it is necessary to provide an innovative and progressive distribution power flow analysis system and method, to solve the above problem.

## SUMMARY OF THE INVENTION

The present invention provides a distribution power flow analysis system, including a first relationship matrix establishing device, a second relationship matrix establishing device, and a distribution power flow analysis device. The first relationship matrix establishing device is used to establish a first relationship matrix, namely, a relationship between a node injection current matrix and a branch current matrix, in which the node injection current matrix is formed by a plurality of injection currents, and the branch current matrix is formed by a plurality of branch currents among nodes. The second relationship matrix establishing device is used to establish a second relationship matrix, namely, a relationship between a node mismatch matrix and the branch current matrix, in which the node mismatch matrix is formed by mismatch voltages between a reference node and other nodes. The distribution power flow analysis device is used to analyze distribution power flow according to the first relationship matrix and the second relationship matrix.

The present invention further provides a distribution power flow analysis method, which includes the following steps: (a) establishing a first relationship matrix, namely, a relationship between a node injection current matrix and a branch current matrix, in which  the node injection current matrix is formed by a plurality of injection currents, and the branch current matrix is formed by a plurality of currents among nodes; (b) establishing a second relationship matrix, namely, a relationship between a node mismatch matrix and the branch current matrix, in which the node mismatch matrix is formed by mismatch voltages between a reference node and other nodes; and (c) analyzing distribution power flow according to the first relationship matrix and the second relationship matrix.

The system and method of the present invention are capable of analyzing the distribution power flow according to the first relationship matrix and the second relationship matrix, and are applicable to cases of adding a new node, impedance or parallel loop. Compared with other conventional methods, the system and method of the present invention have good robustness, fast execution speed and low memory space requirement in power flow calculation of a distribution power system.

## BRIEF DESCRIPTION OF THE DRAWINGS

FIG. 1 is a schematic view of a three-phase impedance model of a conventional node;

FIG. 2 is a schematic view of a distribution power system with 5 nodes according to an embodiment of the present invention;

FIG. 3 is a schematic view of a distribution power system according to a first embodiment of adding a new node of the present invention;

FIG. 4 is a schematic view of a distribution power system according to a second embodiment of adding a new node of the present invention;

FIG. 5 is a schematic view of a distribution power system according to a third embodiment of adding a new impedance of the present invention;

FIG. 6 is a schematic view of a distribution power system according to a fourth embodiment of adding a new node and impedance of the present invention;

FIG. 7 is a schematic flow chart of a distribution power flow analysis method of the present invention;

FIG. 8 is a schematic view of a simulated distribution power system of the present invention;

FIG. 9 is a comparison chart of normalized execution time (NET) of the present invention and conventional methods;

FIG. 10 is a comparison chart of iteration times of the present invention and conventional methods; and

FIG. 11 is a schematic circuit diagram of a distribution power flow analysis system of the present invention.

## DETAILED DESCRIPTION OF THE INVENTION

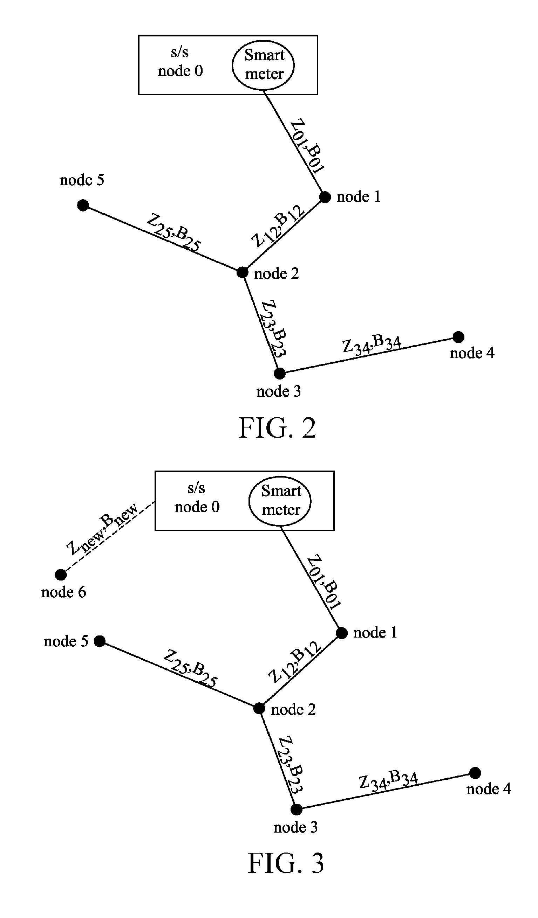

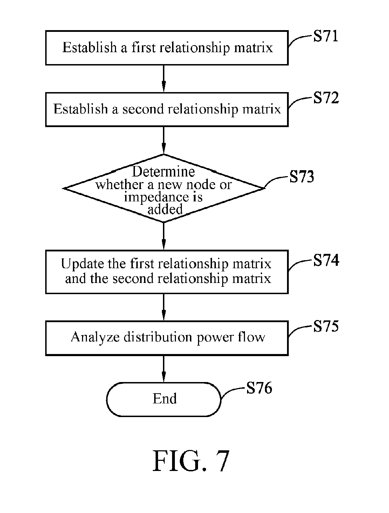

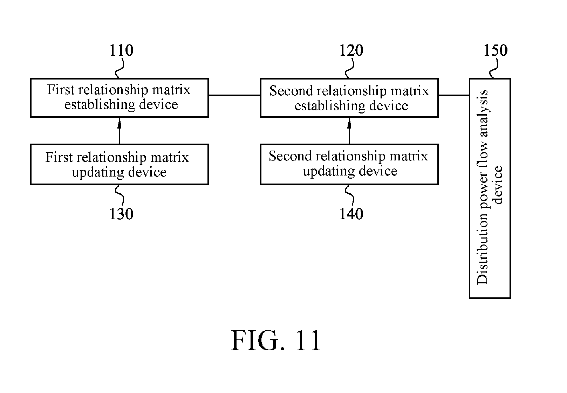

FIG. 2 is a schematic view of a distribution power system with 5 nodes according to an embodiment of the present invention. FIG. 7 is a schematic flow chart of a distribution power flow analysis method of the present invention. FIG. 11 is a schematic circuit diagram of a distribution power flow analysis system of the present invention. The system and method of the present invention are illustrated with reference to FIG. 2 in combination with FIG. 7 and FIG. 11. The distribution power flow analysis system 11 of the present invention includes a first relationship matrix establishing device 110, a second relationship matrix establishing device 120 and a distribution power flow analysis device 150, which may be a programmable device using the provided analysis method, for example, a smart meter. Referring to Step S71, the first relationship matrix establishing device 110 is used to establish a first relationship matrix, namely, a relationship between a node injection current matrix and a branch current matrix, in which the node injection current matrix is formed by a plurality of injection currents, and the branch current matrix is formed by a plurality of branch currents among nodes.

By using an equivalent current injection method, for a current of node $i$, injection power and voltage of a $k$th iteration may indicate an equivalent current value thereof, as shown in Formula (5):

$$I_i^k = \frac{P_i - jQ_i}{(V_i^k)^*} \tag{5},$$

where $V_i^k$ and $I_i^k$ are respectively a voltage value and a current value of the $k$th iteration of node $i$.

A relationship between node injection currents I and branch currents B of FIG. 2 according to the embodiment of the present invention are shown in Formula (6):

$$\begin{aligned} B_{01} &= I_1 + I_2 + I_3 + I_4 + I_5 \\ B_{12} &= I_2 + I_3 + I_4 + I_5 \\ B_{23} &= I_3 + I_4 \\ B_{34} &= I_4, B_{45} = I_5 \end{aligned} \tag{6}.$$

Therefore, the relationship between the branch currents B and the injection currents I may be expressed as Formula (7a) through the first relationship matrix **B$_I$**:

$$\begin{bmatrix} B_{01} \\ B_{12} \\ B_{23} \\ B_{34} \\ B_{25} \end{bmatrix} = \begin{bmatrix} 1 & 1 & 1 & 1 & 1 \\ 0 & 1 & 1 & 1 & 1 \\ 0 & 0 & 1 & 1 & 0 \\ 0 & 0 & 0 & 1 & 0 \\ 0 & 0 & 0 & 0 & 1 \end{bmatrix} \begin{bmatrix} I_1 \\ I_2 \\ I_3 \\ I_4 \\ I_5 \end{bmatrix} \tag{7a}.$$

Formula (7a) may also be expressed by a general formula, as shown in Formula (7b):

$$[B] = [\mathbf{B_I}][I] \tag{7b},$$

where the node injection current matrix [I] is formed by a plurality of injection currents, and the branch current matrix [B] is formed by a plurality of branch currents among nodes. Therefore, **[B$_I$]** is the first relationship matrix between the node injection current matrix [I] and the branch current matrix [B], and is an upper triangular matrix only containing 0 and 1.

Referring to Step S72, the second relationship matrix establishing device 120 is used to establish a second relationship matrix, namely, a relationship between a node mismatch matrix and the branch current matrix, in which the node mismatch matrix is formed by mismatch voltages between a reference node and other nodes.

Further referring to FIG. 2, voltages of nodes 1, 2 and 3 may be rewritten, as shown in Formula (8):

$$V_1 = V_0 - B_{01}Z_{01}$$
$$V_2 = V_1 - B_{12}Z_{12}$$ \hspace{2cm} (8),
$$V_3 = V_2 - B_{23}Z_{23}$$

where $V_i$ is a voltage of node $i$, and $Z_{ij}$ is an impedance between nodes $i$ and $j$. In Formula (8), $V_3$ may be rewritten, as shown in Formula (9):

$$V_3 = V_0 - B_{01}Z_1 - B_{12}Z_{12} - B_{23}Z_{23}$$ \hspace{2cm} (9).

According to Formula (9), the mismatch voltage of the node may be indicated by a function of the branch current and branch impedance. Therefore, the node mismatch matrix may be expressed as Formula (10a).

$$\begin{bmatrix} V_0 \\ V_0 \\ V_0 \\ V_0 \\ V_0 \end{bmatrix} - \begin{bmatrix} V_1 \\ V_2 \\ V_3 \\ V_4 \\ V_5 \end{bmatrix} = \begin{bmatrix} Z_{01} & 0 & 0 & 0 & 0 \\ Z_{01} & Z_{12} & 0 & 0 & 0 \\ Z_{01} & Z_{12} & Z_{23} & 0 & 0 \\ Z_{01} & Z_{12} & Z_{23} & Z_{34} & 0 \\ Z_{01} & Z_{12} & 0 & 0 & Z_{25} \end{bmatrix} \begin{bmatrix} B_{01} \\ B_{12} \\ B_{23} \\ B_{34} \\ B_{25} \end{bmatrix}$$ \hspace{1cm} (10a).

The tolerance $\Delta V$ in Formula (10a) may be expressed in a general formula, as shown in Formula (10b),

$$[\Delta V] = [\mathbf{Z_{V\text{-}BC}}][\mathrm{B}]$$ \hspace{2cm} (10b),

where the node mismatch matrix $[\Delta V]$ is formed by mismatch voltages between a reference node voltage $V_0$ and voltages of other nodes, and $[\mathbf{Z_{V\text{-}BC}}]$ is the second relationship matrix between the node mismatch matrix $[\Delta V]$ and the branch current matrix [B]. The second relationship matrix is the impedance among nodes, and is a lower triangular matrix.

Referring to Step S75, the distribution power flow analysis device 150 is used to analyze distribution power flow according to the first relationship matrix $[\mathbf{B_I}]$ and the second relationship matrix $[\mathbf{Z_{V\text{-}BC}}]$. Therefore, Formula (11) can be obtained by substituting Formula (7b) into Formula (10b):

$$[\Delta V] = [\mathbf{Z_{V\text{-}BC}}][\mathbf{B_I}][I] = [Z_{\mathrm{DPF}}][I]$$ \hspace{2cm} (11);

$$[\Delta V^{k+1}] = [Z_{\mathrm{DPF}}][I^k]$$ \hspace{2cm} (12).

The distribution power flow can be analyzed by solving Formula (5) and Formula (12).

FIG. 3 is a schematic view of a distribution power system according to a first embodiment of adding a new node of the present invention. Referring to FIG. 2 in combination with FIG. 3, the first embodiment of adding a new node of the present invention is to add a new node, namely node 6, connected to the reference node, namely node 0, and to add a new impedance $Z_{new}$ between the new node, namely node 6 and the reference node, namely node 0.

Referring to FIG. 3 in combination with FIG. 7 and FIG. 11, and referring to Step S73 and Step S74, it is determined whether a new node or impedance is added, and if yes, the first relationship matrix and the second relationship matrix are updated. The distribution power flow analysis system 11 of the present invention further includes a first relationship matrix updating device 130 and a second relationship matrix updating device 140, for updating the first relationship matrix and the second relationship matrix when a new node or impedance is added. According to the above first embodiment of adding a new node, the first relationship matrix updating device 130 adds a new column and a new row to the first relationship matrix. A diagonal position of the newly added column and row is 1, and the rest is 0, which is expressed in Formula (13a):

$$\begin{bmatrix} B \\ B_{new} \end{bmatrix} = \begin{bmatrix} \mathbf{B}_{I,origin} & 0 \\ 0 & 1 \end{bmatrix} \begin{bmatrix} I \\ I_{new} \end{bmatrix} \tag{13a}.$$

The second relationship matrix updating device 140 adds a new column and a new row to the second relationship matrix. A diagonal position of the newly added column and row is the new impedance, and the rest is 0, which is expressed in Formula (13b):

$$\begin{bmatrix} V_0 \\ V_0 \\ V_0 \\ V_0 \\ V_0 \\ V_0 \end{bmatrix} - \begin{bmatrix} V_1 \\ V_2 \\ V_3 \\ V_4 \\ V_5 \\ V_{new} \end{bmatrix} = \begin{bmatrix} Z_{01} & 0 & 0 & 0 & 0 & 0 \\ Z_{01} & Z_{12} & 0 & 0 & 0 & 0 \\ Z_{01} & Z_{12} & Z_{23} & 0 & 0 & 0 \\ Z_{01} & Z_{12} & Z_{23} & Z_{34} & 0 & 0 \\ Z_{01} & Z_{12} & 0 & 0 & Z_{25} & 0 \\ 0 & 0 & 0 & 0 & 0 & Z_{new} \end{bmatrix} \begin{bmatrix} B_{01} \\ B_{12} \\ B_{23} \\ B_{34} \\ B_{25} \\ B_{new} \end{bmatrix} \tag{13b}.$$

Formula (13b) may be expressed by a general formula, as shown in Formula (13c):

$$\begin{bmatrix} \Delta V \\ \Delta V_{new} \end{bmatrix} = \begin{bmatrix} Z_{origin} & 0 \\ 0 & Z_{new} \end{bmatrix} \begin{bmatrix} B \\ B_{new} \end{bmatrix} \tag{13c}.$$

Formula (13d) can be obtained by substituting Formula (13a) into Formula (13c):

$$\begin{bmatrix} \Delta V \\ \Delta V_{new} \end{bmatrix} = \begin{bmatrix} Z_{origin} & 0 \\ 0 & Z_{new} \end{bmatrix} \begin{bmatrix} \mathbf{B}_{I,origin} & 0 \\ 0 & 1 \end{bmatrix} \begin{bmatrix} I \\ I_{new} \end{bmatrix} \tag{13d}.$$

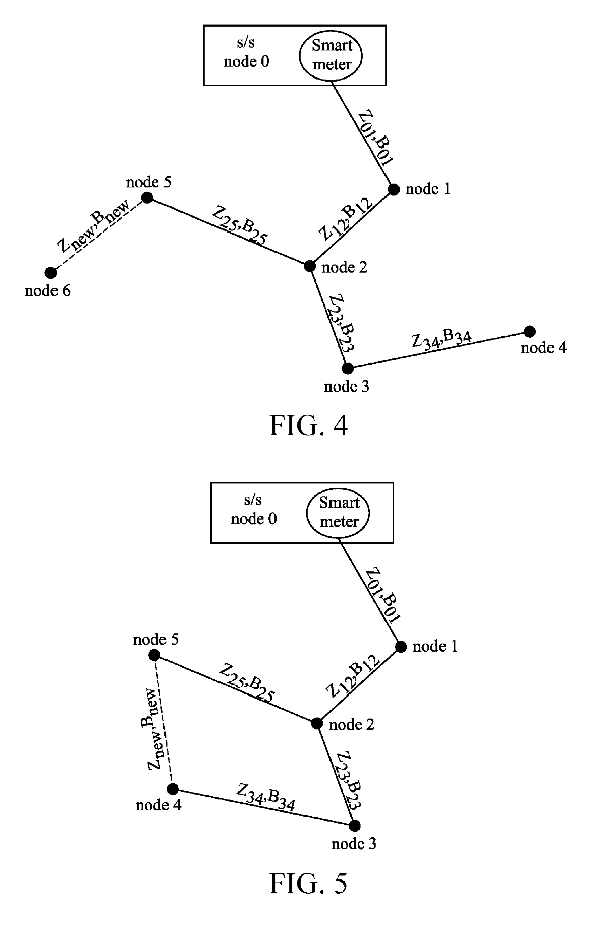

FIG. 4 is a schematic view of a distribution power system according to a second embodiment of adding a new node of the present invention. Referring to FIG. 2 in combination with FIG. 4, the second embodiment of adding a new node of the present invention is to add a new node, namely node 6, connected to a $k^{th}$ node (the $5^{th}$ node, namely node 5, in this embodiment), and to add a new impedance $Z_{new}$ between the new node, namely node 6 and the $5^{th}$ node, namely node 5.
Referring to FIG. 4 in combination with FIG. 11, the first relationship matrix updating device 130 adds a new column and a new row to the first relationship matrix, and duplicates a value of a $k^{th}$ column (the $5^{th}$ column in this embodiment) of the first relationship matrix to the newly added column. A diagonal position of the newly added column and row is 1, and the rest is 0, which is expressed in Formula (14a):

$$\begin{bmatrix} B \\ B_{new} \end{bmatrix} = \begin{bmatrix} \mathbf{B}_{\mathbf{I},origin} & col.(k) \\ 0 & 1 \end{bmatrix} \begin{bmatrix} I \\ I_{new} \end{bmatrix} \tag{14a},$$

where $col.(k)$ is the value of the $k^{th}$ column (the $5^{th}$ column in this embodiment) of the original first relationship matrix.

The second relationship matrix updating device 140 adds a new column and a new row to the second relationship matrix, and duplicates a value of a $k^{th}$ row (the $5^{th}$ row in this embodiment) of the second relationship matrix to the newly added row. A diagonal position of the newly added column and row is the new impedance, and the rest is 0, which is expressed in Formula (14b):

$$\begin{bmatrix} V_0 \\ V_0 \\ V_0 \\ V_0 \\ V_0 \\ V_0 \end{bmatrix} - \begin{bmatrix} V_1 \\ V_2 \\ V_3 \\ V_4 \\ V_5 \\ V_{new} \end{bmatrix} = \begin{bmatrix} Z_{01} & 0 & 0 & 0 & 0 & 0 \\ Z_{01} & Z_{12} & 0 & 0 & 0 & 0 \\ Z_{01} & Z_{12} & Z_{23} & 0 & 0 & 0 \\ Z_{01} & Z_{12} & Z_{23} & Z_{34} & 0 & 0 \\ Z_{01} & Z_{12} & 0 & 0 & Z_{25} & 0 \\ Z_{01} & Z_{12} & 0 & 0 & Z_{25} & Z_{new} \end{bmatrix} \begin{bmatrix} B_{01} \\ B_{12} \\ B_{23} \\ B_{34} \\ B_{25} \\ B_{new} \end{bmatrix} \tag{14b}.$$

Formula (14b) may be expressed by a general formula, as shown in Formula (14c):

$$\begin{bmatrix} \Delta V \\ \Delta V_{new} \end{bmatrix} = \begin{bmatrix} Z_{origin} & 0 \\ row\_k & Z_{new} \end{bmatrix} \begin{bmatrix} B \\ B_{new} \end{bmatrix} \tag{14c},$$

where $row.(k)$ is the value of the $k^{th}$ row (the $5^{th}$ row in this embodiment) of the original second relationship matrix. Formula (14d) can be obtained by substituting Formula (14a) into Formula (14c):

$$\begin{bmatrix} \Delta V \\ \Delta V_{new} \end{bmatrix} = \begin{bmatrix} Z_{origin} & 0 \\ row\_k & Z_{new} \end{bmatrix} \begin{bmatrix} \mathbf{B}_{\mathbf{I},origin} & col.(k) \\ 0 & 1 \end{bmatrix} \begin{bmatrix} I \\ I_{new} \end{bmatrix} \tag{14d}.$$

FIG. 5 is a schematic view of a distribution power system according to a third embodiment of adding a new impedance of the present invention. Referring to FIG. 2 in combination with FIG. 5, the third embodiment of adding a new impedance of the present invention is to add a new impedance $Z_{new}$ between an $i^{th}$ node (the $4^{th}$ node, namely node 4, in this embodiment) and a $j^{th}$ node (the $5^{th}$ node, namely node 5, in this embodiment).

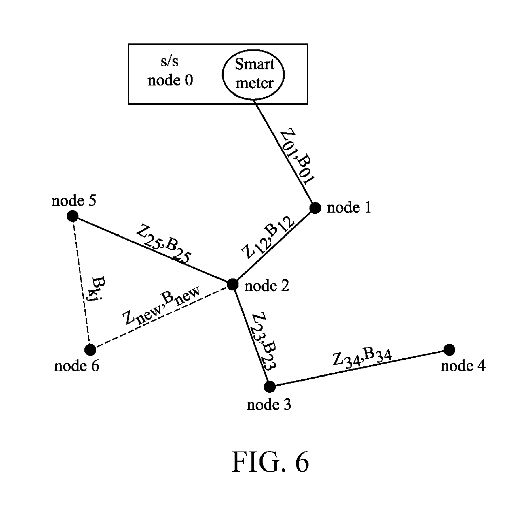

Referring to FIG. 6 in combination with FIG. 11, the first relationship matrix updating device 130 adds a new column and a new row to the first relationship matrix, and fills a difference of the value of the $i^{th}$ column (the $4^{th}$ column in this embodiment) of the first relationship matrix subtracted by the value of the $j^{th}$ column (the $5^{th}$ column in this embodiment) to the newly added column. A diagonal position of the newly added column and row is 1, and the rest is 0. In this embodiment, a new impedance $Z_{new}$ is added between the $4^{th}$ node, namely node 4 and the $5^{th}$ node, namely node 5. Injection currents of the $4^{th}$ node, namely node 4 and the $5^{th}$ node, namely node 5 are expressed in Formula (15a):

$$I_4' = I_4 + B_{new}$$
$$I_5' = I_5 - B_{new} \tag{15a}.$$

The first relationship matrix is updated as shown in Formula (15b):

$$\begin{bmatrix} B_{01} \\ B_{12} \\ B_{23} \\ B_{34} \\ B_{25} \end{bmatrix} = \begin{bmatrix} 1 & 1 & 1 & 1 & 1 \\ 0 & 1 & 1 & 1 & 1 \\ 0 & 0 & 1 & 1 & 0 \\ 0 & 0 & 0 & 1 & 0 \\ 0 & 0 & 0 & 0 & 1 \end{bmatrix} \begin{bmatrix} I_1 \\ I_2 \\ I_3 \\ I_4 + B_{new} \\ I_5 - B_{new} \end{bmatrix} \qquad (15b).$$

Formula (15b) may be expressed as Formula (15c) by transposing $B_{new}$:

$$\begin{bmatrix} B_{01} \\ B_{12} \\ B_{23} \\ B_{34} \\ B_{25} \\ B_{56} \end{bmatrix} = \begin{bmatrix} 1 & 1 & 1 & 1 & 1 & 0 \\ 0 & 1 & 1 & 1 & 1 & 0 \\ 0 & 0 & 1 & 1 & 0 & 1 \\ 0 & 0 & 0 & 1 & 0 & 1 \\ 0 & 0 & 0 & 0 & 1 & -1 \\ 0 & 0 & 0 & 0 & 0 & 1 \end{bmatrix} \begin{bmatrix} I_1 \\ I_2 \\ I_3 \\ I_4 \\ I_5 \\ B_{new} \end{bmatrix} \qquad (15c).$$

Formula (15c) may be expressed by a general formula, as shown in Formula (15d):

$$\begin{bmatrix} B \\ B_{new} \end{bmatrix} = \begin{bmatrix} \mathbf{B}_{\mathbf{I},origin} & col.(i-j) \\ 0 & 1 \end{bmatrix} \begin{bmatrix} I \\ B_{new} \end{bmatrix} \qquad (15d),$$

where *col.(i-j)* is a difference of the value of the $i^{th}$ column (the $4^{th}$ column in this embodiment) of the original first relationship matrix subtracted by the value of the $j^{th}$ column (the $5^{th}$ column in this embodiment).

The second relationship matrix updating device 140 adds a new column and a new row to the second relationship matrix, and fills a difference of a value of an $i^{th}$ row of the second relationship matrix subtracted by a value of a $j^{th}$ row to the newly added row. A diagonal position of the newly added column and row is the new impedance, and the rest is 0. KVL is applied to the newly added loop, as shown in Formula (16a):

$$Z_{23}B_{23} + Z_{34}B_{34} + Z_{new}B_{new} - Z_{25}B_{25} = 0 \qquad (16a).$$

Formula (16a) and Formula (10a) are combined, and a node mismatch matrix may be expressed as Formula (16b):

$$\begin{bmatrix} V_0 \\ V_0 \\ V_0 \\ V_0 \\ V_0 \\ 0 \end{bmatrix} - \begin{bmatrix} V_1 \\ V_2 \\ V_3 \\ V_4 \\ V_5 \\ 0 \end{bmatrix} = \begin{bmatrix} Z_{01} & 0 & 0 & 0 & 0 & 0 \\ Z_{01} & Z_{12} & 0 & 0 & 0 & 0 \\ Z_{01} & Z_{12} & Z_{23} & 0 & 0 & 0 \\ Z_{01} & Z_{12} & Z_{23} & Z_{34} & 0 & 0 \\ Z_{01} & Z_{12} & 0 & 0 & Z_{25} & 0 \\ 0 & 0 & Z_{23} & Z_{34} & -Z_{25} & Z_{new} \end{bmatrix} \begin{bmatrix} B_{01} \\ B_{12} \\ B_{23} \\ B_{34} \\ B_{25} \\ B_{new} \end{bmatrix} \quad (16b).$$

Formula (16b) may be expressed by a general formula, as shown in Formula (16c):

$$\begin{bmatrix} \Delta V \\ 0 \end{bmatrix} = \begin{bmatrix} Z_{origin} & 0 \\ row.(i-j) & Z_{new} \end{bmatrix} \begin{bmatrix} B \\ B_{new} \end{bmatrix} \quad (16c),$$

where *row.(i-j)* is a difference of the value of the $i^{th}$ row (the $4^{th}$ row in this embodiment) of the original second relationship matrix subtracted by the value of the $j^{th}$ row (the $5^{th}$ row in this embodiment). Formula (16d) can be obtained by substituting Formula (15c) into Formula (16c):

$$\begin{bmatrix} \Delta V \\ 0 \end{bmatrix} = \begin{bmatrix} Z_{origin} & 0 \\ row.(i-j) & Z_{new} \end{bmatrix} \begin{bmatrix} \mathbf{B}_{I,origin} & col.(i-j) \\ 0 & 1 \end{bmatrix} \begin{bmatrix} I \\ B_{new} \end{bmatrix} \quad (16d).$$

The new row is *"row i minus row j of Z$_{origin}$"*, and fill $Z_{new}$ to the diagonal position, where

$$B_{new}^{(k)} = \frac{V_i^{(k)} - V_j^{(k)}}{Z_{new}} \quad (16e).$$

The iterative process can be implemented by using (5), (16d) and (16e) until a preset tolerance $\Delta v$ is reached.

FIG. 6 is a schematic view of a distribution power system according to a fourth embodiment of adding a new node and impedance of the present invention. Referring to FIG. 2 in combination with FIG. 6, the fourth embodiment of adding a new node and impedance of the present invention is to add a new node, namely node 6 between an $i^{th}$ node (the second node, namely node 2, in this embodiment) and a $j^{th}$ node (the $5^{th}$ node, namely node 5, in this embodiment), and to add a new impedance $Z_{new}$ between the new node, namely node 6 and the $i^{th}$ node (the second node, namely node 2 in this embodiment).

Referring to FIG. 5 in combination with FIG. 11, the first relationship matrix updating device 130 adds two new columns and two new rows to the first relationship matrix, duplicates a value of an $i^{th}$ column (the second column in this embodiment) of the first relationship matrix to the newly added first column, and fills a difference of a value of the newly added first column of the first relationship matrix subtracted by a value of a $j^{th}$ column (the $5^{th}$ column in this embodiment) to the newly added second column. A diagonal position of the newly added column and row is 1, and the rest is 0, as shown in Formula (17a):

$$\begin{bmatrix} B_{01} \\ B_{12} \\ B_{23} \\ B_{34} \\ B_{25} \\ B_{new} \\ B_{kj} \end{bmatrix} = \begin{bmatrix} 1 & 1 & 1 & 1 & 1 & 1 & 0 \\ 0 & 1 & 1 & 1 & 1 & 1 & 0 \\ 0 & 0 & 1 & 1 & 0 & 0 & 0 \\ 0 & 0 & 0 & 1 & 0 & 0 & 0 \\ 0 & 0 & 0 & 0 & 1 & 0 & -1 \\ 0 & 0 & 0 & 0 & 0 & 1 & 1 \\ 0 & 0 & 0 & 0 & 0 & 0 & 1 \end{bmatrix} \begin{bmatrix} I_1 \\ I_2 \\ I_3 \\ I_4 \\ I_5 \\ I_{new} \\ B_{kj} \end{bmatrix} \qquad (17a).$$

Formula (17a) may be expressed by a general formula, as shown in Formula (17b):

$$\begin{bmatrix} B \\ B_{new} \\ B_{kj} \end{bmatrix} = \begin{bmatrix} \mathbf{B}_{I,origin} & col.(i) & \\ 0 & 1 & col.(k-j) \\ \hline 0 & & 1 \end{bmatrix} \begin{bmatrix} I \\ I_{new} \\ B_{kj} \end{bmatrix} \qquad (17b),$$

where *col.(i)* is the value of the $i^{th}$ column (the second column in this embodiment) of the original first relationship matrix, and *col.(k-j)* is the difference of the value of the newly added first column of the first relationship matrix subtracted by the value of the $j^{th}$ column (the $5^{th}$ column in this embodiment).

The second relationship matrix updating device 140 adds two new columns and two new rows to the second relationship matrix, duplicates a value of an $i^{th}$ row (the second row in this embodiment) of the second relationship matrix to the newly added first row, and fills a difference of a value of the newly added first row of the second relationship matrix subtracted by a value of a $j^{th}$ row (the $5^{th}$ row in this embodiment) to the newly added second row. A diagonal position of the newly added first column and the newly added first row is the new impedance, and the rest is 0. KVL is applied to the newly added loop, as expressed in Formula (18a):

$$Z_{new} B_{new} - B_{25} Z_{25} = 0 \qquad (18a).$$

Formula (18a) and Formula (10a) are combined, and a node mismatch matrix may be expressed as Formula (18b):

$$\begin{bmatrix} V_0 \\ V_0 \\ V_0 \\ V_0 \\ V_0 \\ V_0 \\ 0 \end{bmatrix} - \begin{bmatrix} V_1 \\ V_2 \\ V_3 \\ V_4 \\ V_5 \\ V_{new} \\ 0 \end{bmatrix} = \begin{bmatrix} Z_{01} & 0 & 0 & 0 & 0 & 0 & 0 \\ Z_{01} & Z_{12} & 0 & 0 & 0 & 0 & 0 \\ Z_{01} & Z_{12} & Z_{23} & 0 & 0 & 0 & 0 \\ Z_{01} & Z_{12} & Z_{23} & Z_{34} & 0 & 0 & 0 \\ Z_{01} & Z_{12} & 0 & 0 & Z_{25} & 0 & 0 \\ Z_{01} & Z_{12} & 0 & 0 & 0 & Z_{new} & 0 \\ 0 & 0 & 0 & 0 & -Z_{25} & Z_{new} & 0 \end{bmatrix} \begin{bmatrix} B_{01} \\ B_{12} \\ B_{23} \\ B_{34} \\ B_{45} \\ B_{new} \\ B_{kj} \end{bmatrix} \qquad (18b).$$

Formula (18b) may be expressed by a general formula, as shown in Formula (18c):

$$\begin{bmatrix} \Delta V \\ \Delta V_{new} \\ 0 \end{bmatrix} = \begin{bmatrix} Z_{origin} & 0 & \vdots & 0 \\ \hline row(i) & Z_{new} & \vdots & \\ \hline row(k-j) & \vdots & 0 \end{bmatrix} \begin{bmatrix} B \\ B_{new} \\ B_{kj} \end{bmatrix} \tag{18c},$$

where $row.(i)$ is the value of the $i^{th}$ row (the second row in this embodiment) of the original second relationship matrix, and $row.(k\text{-}j)$ is the difference of the value of the newly added first row of the second relationship matrix subtracted by the value of the $j^{th}$ row (the $5^{th}$ row in this embodiment). Formula (18d) can be obtained by substituting Formula (17b) into Formula (18c):

$$\begin{bmatrix} \Delta V \\ \Delta V_{new} \\ 0 \end{bmatrix} = \begin{bmatrix} Z_{origin} & 0 & \vdots & 0 \\ \hline row(i) & Z_{new} & \vdots & \\ \hline row(k-j) & \vdots & 0 \end{bmatrix} \begin{bmatrix} \mathbf{B}_{I,origin} & col.(i) & \vdots & col.(k-j) \\ \hline 0 & 1 & \vdots & \\ \hline 0 & \vdots & 1 \end{bmatrix} \begin{bmatrix} I \\ I_{new} \\ B_{kj} \end{bmatrix} \tag{18d};$$

$$B_{new}^{(k)} = \frac{V_i^{(k)} - V_k^{(k)}}{Z_{new}}$$

$$B_{kj}^{(k)} = B_{new}^{(k)} - I_{new}^{(k)} \tag{18e}.$$

The iterative process can be implemented by using (5), (18d) and (18e) until a preset tolerance $\Delta v$ is reached.

Formula (18d) may be expressed as Formula (19):

$$\begin{bmatrix} \Delta V \\ 0 \end{bmatrix} = \begin{bmatrix} \mathbf{Z}_{V\text{-}BC} \end{bmatrix} \begin{bmatrix} \mathbf{B}_I \end{bmatrix} \begin{bmatrix} I \\ B_{new} \end{bmatrix} = \begin{bmatrix} A & M^T \\ M & N \end{bmatrix} \begin{bmatrix} I \\ B_{new} \end{bmatrix} \tag{19}.$$

The node mismatch matrix may be expressed as Formula (20) by using Kron's Reduction:

$$\Delta V = \begin{bmatrix} A - M^T N^{-1} M \end{bmatrix} \begin{bmatrix} I \end{bmatrix} \tag{20}.$$

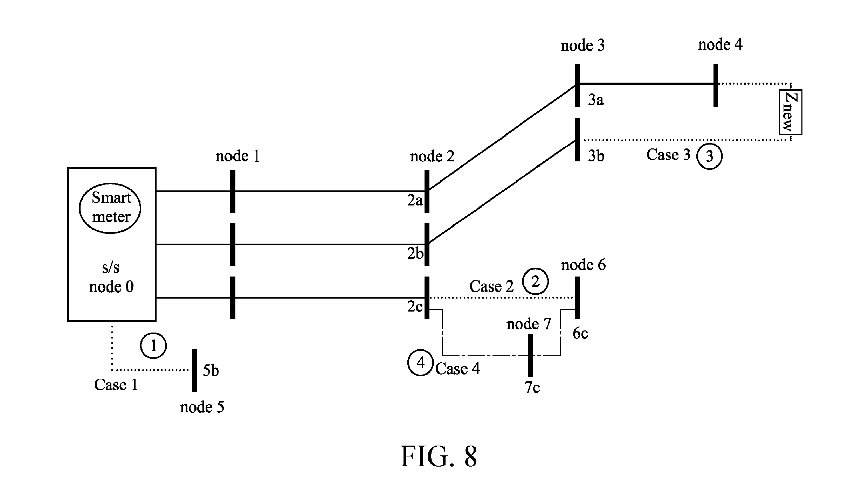

FIG. 8 is a schematic view of a simulated distribution power system of the present invention. The simulated distribution power system has 8 nodes. In the present invention, analog comparison is performed on the conventional Gauss implicit Z-matrix method, the conventional Newton-Raphson method and the method of the present invention.

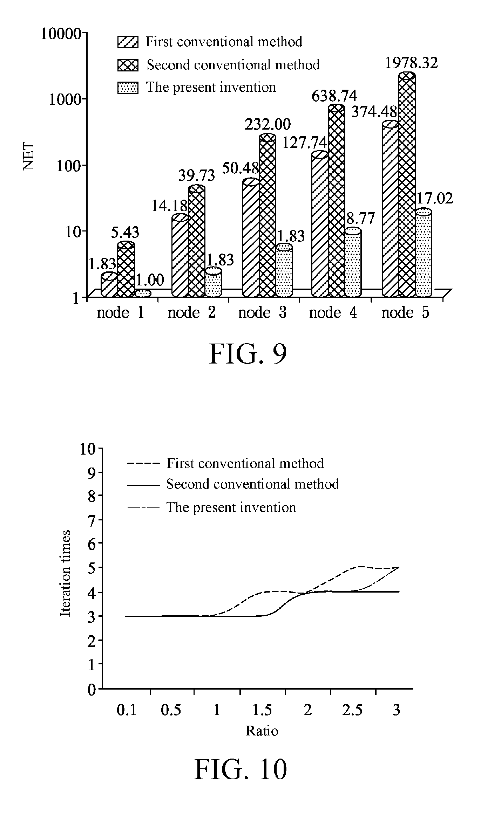

FIG. 9 is a comparison chart of normalized execution time (NET) of the present invention and the conventional methods. The first conventional method is the conventional Gauss implicit Z-matrix method, and the second conventional method is the Newton-Raphson method. According to FIG. 9, the NET of the present invention is far less than that of the conventional methods, and when the number of the nodes is increased, the method of the present invention gets more efficient and faster.

FIG. 10 is a comparison chart of iteration times of the present invention and the conventional methods.

The system and method of the present invention are capable of analyzing distribution power flow by using the first relationship matrix and the second relationship matrix, and are applicable to cases of adding a new node or impedance. Compared with other conventional methods, the system and method of the present invention have good robustness, fast execution speed and low memory space requirement in power flow calculation of a distribution power system.

The above embodiments are merely for illustrating the principles and efficacies of the present invention, but are not intended to limit the present invention. Therefore, modifications and variations to the above embodiments made by persons skilled in the art do not depart from the spirit of the present invention. The scope of the present invention is subject to the scope of the claims listed below.

**Claims**

1. A distribution power flow analysis system, comprising:

   a first relationship matrix establishing device, for establishing a first relationship matrix, namely, a relationship between a node injection current matrix and a branch current matrix, wherein the node injection current matrix is formed by a plurality of injection currents, and the branch current matrix is formed by a plurality of branch currents among nodes;
   a second relationship matrix establishing device, for establishing a second relationship matrix, namely, a relationship between a node mismatch matrix and the branch current matrix, wherein the node mismatch matrix is formed by mismatch voltages between a reference node and other nodes; and
   a distribution power flow analysis device, for analyzing distribution power flow according to the first relationship matrix and the second relationship matrix.

2. The distribution power flow analysis system according to claim 1, wherein a device of the system comprises a smart meter, and the smart meter is a programmable device using a power flow analysis method.

3. The distribution power flow analysis system according to claim 1, wherein the first relationship matrix is an upper triangular matrix and the second relationship matrix is a lower triangular matrix.

4. The distribution power flow analysis system according to claim 1, further comprising a first relationship matrix updating device and a second relationship matrix updating device, for updating the first relationship matrix and the second relationship matrix when a new node or impedance is added.

5. The distribution power flow analysis system according to claim 4, wherein a new node connected to the reference node is added, and a new impedance is added between the new node and the reference node, the first relationship matrix updating device adds a new column and a new row to the first relationship matrix, a diagonal position of the newly added column and row is 1, and the rest is 0; while the second relationship matrix updating device adds a new column and a new row to the second relationship matrix, a diagonal position of the newly added column and row is the new impedance, and the rest is 0.

6. The distribution power flow analysis system according to claim 4, wherein a new node connected to a $k^{th}$ node is added, and a new impedance is added between the new node and the $k^{th}$ node, the first relationship matrix updating device adds a new column and a new row to the first relationship matrix, and duplicates a value of a $k^{th}$ column of the first relationship matrix to the newly added column, a diagonal position of the newly added column and row is 1, and the rest is 0; while the second relationship matrix updating device adds a new column and a new row to the second relationship matrix, and duplicates a value of a $k^{th}$ row of the second relationship matrix to the newly added row, a diagonal position of the newly added column and row is the new impedance, and the rest is 0.

7. The distribution power flow analysis system according to claim 4, wherein a new impedance is added between an $i^{th}$ node and a $j^{th}$ node, the first relationship matrix updating device adds a new column and a new row to the first relationship matrix, and fills a difference of a value of an $i^{th}$ column of the first relationship matrix subtracted by a value of a $j^{th}$ column to the newly added column, a diagonal position of the newly added column and row is 1, and the rest is 0; while the second relationship matrix updating device adds a new column and a new row to the second relationship matrix, and fills a difference of a value of an $i^{th}$ row of the second relationship matrix subtracted by a value of a $j^{th}$ row to the newly added row, a diagonal position of the newly added column and row is the new impedance, and the rest is 0.

8. The distribution power flow analysis system according to claim 4, wherein a new node is added between an $i^{th}$ node and a $j^{th}$ node, and a new impedance is added between the new node and the $i^{th}$ node, the first relationship matrix updating device adds two new columns and two new rows to the first relationship matrix, duplicates a value of an $i^{th}$ column of the first relationship matrix to the newly added first column, and fills a difference of a value of the newly added first column of the first relationship matrix subtracted by a value of a $j^{th}$ column to the newly added second column, a diagonal position of the newly added column and row is 1, and the rest is 0; while the second relationship matrix updating device adds two new columns and two new rows to the second relationship matrix, duplicates a value of an $i^{th}$ row of the second relationship matrix to the newly added first row, and fills a difference of a value of the newly added first row of the second relationship matrix subtracted by a value of a $j^{th}$ row to the newly added second row, a diagonal position of the newly added first column and the newly added first row is the new impedance, and the rest is 0.

9.  A distribution power flow analysis method, comprising:

    (a) establishing a first relationship matrix, namely, a relationship between a node injection current matrix and a branch current matrix, wherein the node injection current matrix is formed by a plurality of injection currents, and the branch current matrix is formed by a plurality of branch currents among nodes;
    (b) establishing a second relationship matrix, namely, a relationship between a node mismatch matrix and the branch current matrix, wherein the node mismatch matrix is formed by mismatch voltages between a reference node and other nodes; and
    (c) analyzing distribution power flow according to the first relationship matrix and the second relationship matrix.

10. The distribution power flow analysis method according to claim 9, wherein the first relationship matrix is an upper triangular matrix and the second relationship matrix is a lower triangular matrix with impedance.

11. The distribution power flow analysis method according to claim 9, further comprising a first relationship matrix updating step and a second relationship matrix updating step, for updating the first relationship matrix and the second relationship matrix when a new node, impedance or parallel loop is added.

12. The distribution power flow analysis method according to claim 11, wherein a new node connected to the reference node is added, and a new impedance is added between the new node and the reference node, the first relationship matrix updating step is used to add a new column and a new row to the first relationship matrix, a diagonal position of the newly added column and row is 1, and the rest is 0; while the second relationship matrix updating step is used to add a new column and a new row to the second relationship matrix, a diagonal position of the newly added column and row is the new impedance, and the rest is 0.

13. The distribution power flow analysis method according to claim 11, wherein a new node connected to a $k^{th}$ node is added, and a new impedance is added between the new node and the $k^{th}$ node, the first relationship matrix updating step is used to add a new column and a new row to the first relationship matrix, and duplicate a value of a $k^{th}$ column of the first relationship matrix to the newly added column, a diagonal position of the newly added column and row is 1, and the rest is 0; while the second relationship matrix updating step is used to add a new column and a new row to the second relationship matrix, and duplicate a value of a $k^{th}$ row of the second relationship matrix to the newly added row, a diagonal position of the newly added column and row is the new impedance, and the rest is 0.

14. The distribution power flow analysis method according to claim 11, wherein a new impedance is added between an $i^{th}$ node and a $j^{th}$ node, the first relationship matrix updating step is used to add a new column and a new row to the first relationship matrix, and fill a difference of a value of an $i^{th}$ column of the first relationship matrix subtracted by a value of a $j^{th}$ column to the newly added column, a diagonal position of the newly added column and row is 1, and the rest is 0; while the second relationship matrix updating step is used to add a new column and a new row to the second relationship matrix, and fill a difference of a value of an $i^{th}$ row of the second relationship matrix subtracted by a value of a $j^{th}$ row to the newly added row, a diagonal position of the newly added column and row is the new impedance, and the rest is 0.

15. The distribution power flow analysis method according to claim 11, wherein a new node is added between an $i^{th}$ node and a $j^{th}$ node, and a new impedance is added between the new node and the $i^{th}$ node, the first relationship matrix updating step is used to add two new columns and two new rows to the first relationship matrix, duplicate a value of an $i^{th}$ column of the first relationship matrix to the newly added first column, and fill a difference of a value of the newly added first column of the first relationship matrix subtracted by a value of a $j^{th}$ column to the newly added second column, a diagonal position of the newly added column and row is 1, and the rest is 0; while the second relationship matrix updating step is used to add two new columns and two new rows to the second relationship matrix, duplicate a value of an $i^{th}$ row of the second relationship matrix to the newly added first row, and fill a difference of a value of the newly added first row of the second relationship matrix subtracted by a value of a $j^{th}$ row to the newly added second row, a diagonal position of the newly added first column and the newly added first row is the new impedance, and the rest is 0.

FIG. 1

s/s
node 0

Smart
meter

$Z_{01}, B_{01}$

node 5

node 1

$Z_{25}, B_{25}$

$Z_{12}, B_{12}$

node 2

$Z_{23}, B_{23}$

$Z_{34}, B_{34}$

node 4

node 3

## FIG. 2

$Z_{new}, B_{new}$

s/s
node 0

Smart
meter

$Z_{01}, B_{01}$

node 6

node 5

node 1

$Z_{25}, B_{25}$

$Z_{12}, B_{12}$

node 2

$Z_{23}, B_{23}$

$Z_{34}, B_{34}$

node 4

node 3

## FIG. 3

FIG. 4

FIG. 5

FIG. 6

Establish a first relationship matrix — S71

Establish a second relationship matrix — S72

Determine whether a new node or impedance is added — S73

Update the first relationship matrix and the second relationship matrix — S74

Analyze distribution power flow — S75

End — S76

FIG. 7

FIG. 8

FIG. 9

FIG. 10

FIG. 11

**Europäisches Patentamt**
**European Patent Office**
**Office européen des brevets**

# EUROPEAN SEARCH REPORT

Application Number

EP 12 16 6226

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TING-CHIA OU ET AL: "A novel Z-matrix algorithm for distribution power flow solution", POWERTECH, 2009 IEEE BUCHAREST, IEEE, PISCATAWAY, NJ, USA, 28 June 2009 (2009-06-28), pages 1-8, XP031543254, ISBN: 978-1-4244-2234-0 * the whole document * | 1-15 | INV. G06F17/50 |
| X | WHEI-ALIN LIN ET AL: "A new building algorithm for Z-matrix", POWER SYSTEM TECHNOLOGY, 2000. PROCEEDINGS. POWERCON 2000. INTERNATION AL CONFERENCE ON 4-7 DECEMBER 2000, PISCATAWAY, NJ, USA,IEEE, 4 December 2000 (2000-12-04), pages 1041-1046, XP010528139, ISBN: 978-0-7803-6338-0 * the whole document * | 1-15 | |
| X | LIU BAOZHU ET AL: "A general algorithm for building Z-matrix based on transitional matrices", ELECTRIC UTILITY DEREGULATION AND RESTRUCTURING AND POWER TECHNOLOGIES, 2008. DRPT 2008. THIRD INTERNATIONAL CONFERENCE ON, IEEE, PISCATAWAY, NJ, USA, 6 April 2008 (2008-04-06), pages 794-797, XP031253962, ISBN: 978-7-900714-13-8 * the whole document * | 1,3,9,10 | **TECHNICAL FIELDS SEARCHED (IPC)** G06F |

-/--

The present search report has been drawn up for all claims

| Place of search | Date of completion of the search | Examiner |
|---|---|---|
| Munich | 4 July 2012 | Lerbinger, Klaus |

EPO FORM 1503 03.82 (P04C01)

**EUROPEAN SEARCH REPORT**

Application Number

EP 12 16 6226

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TENG J-H ET AL: "Decomposition approach and analysis for a <E1>Z</E1>-matrix building process", IEE PROCEEDINGS: GENERATION, TRANSMISSION AND DISTRIBUTION, INSTITUTION OF ELECTRICAL ENGINEERS, GB, vol. 151, no. 5, 5 November 2004 (2004-11-05), pages 638-643, XP006022993, ISSN: 1350-2360, DOI: 10.1049/IP-GTD:20040799 * the whole document * ----- | 1,3,9,10 | |
| | | | **TECHNICAL FIELDS SEARCHED (IPC)** |

The present search report has been drawn up for all claims

| Place of search | Date of completion of the search | Examiner |
|---|---|---|
| Munich | 4 July 2012 | Lerbinger, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)